# EUROPÄISCHE PATENTSCHRIFT

(11) **EP 2 243 346 B1**
(45) Veröffentlichungstag und Bekanntmachung des Hinweises auf die Patenterteilung: **23.11.2011**
(21) Anmeldenummer: 10401069.9
(22) Anmeldetag: 21.08.1999
(51) Int. Cl.: A01C 17/00, A01C 15/00

(54) **Zentrifugaldüngerstreuer**
Centrifugal fertilizer spreader
Epandeur d'engrais à distribution centrifuge

(30) Priorität: 24.09.1998 DE 19843745; 24.09.1998 DE 19843746; 24.09.1998 DE 19843747; 22.01.1999 DE 19902496
(43) Veröffentlichungstag der Anmeldung: 27.10.2010
(62) Teilanmeldung aus: 06003345.3
(73) Patentinhaber: Amazonen-Werke H. Dreyer GmbH & Co. KG, 49205 Hasbergen (DE)
(72) Erfinder: Lührmann, Johannes, 49134 Wallenhorst (DE); Walter, Achim, 49078 Osnabrück (DE); Dreyer, Heinz, 49205 Hasbergen (DE)

(56) Entgegenhaltungen:
- EP-A1- 0 347 643
- EP-A2- 0 838 142
- DE-A1- 3 739 265
- DE-A1- 19 619 162
- US-A- 4 763 844

## Beschreibung

Die Erfindung betrifft ein Verfahren zum Rand- und/oder Grenzstreuen gemäß des Oberbegriffes des Patentanspruches 1.

Bei Schleuderdüngerstreuern besteht der Wunsch, je nach dem ob die Feldrandgrenze benachbart zu einem Nachbarfeld oder an einen Weg oder Wassergraben angrenzend liegt, das Rand- oder Grenzstreuen durchzuführen. Beim sogenannten Randstreuen wird in Kauf genommen, dass wenn die Feldrandgrenze an einem weiteren Feld angrenzend liegt, dass, um eine möglichst vollständige Düngung bis zum Feldrand zu erreichen, ein Teil des Düngers auf das angrenzende Feld geworfen wird. Beim Grenzstreuen jedoch, wenn die Feldrandgrenze an einen Weg oder Wassergraben angrenzt, darf kein Dünger über die Feldrandgrenze hinausgeworfen werden.

Zentrifugaldüngerstreuer gemäß dem Oberbegriff von Anspruch 1 sind in der europäischen Offenlegungsschrift 0 127 922 beschrieben. Um bei dieser Maschine das Grenzstreuen durchzuführen, sind Leitelemente aufweisende Grenzstreueinrichtungen zur Erzeugung eines Streubildes mit einer zur Grenze steil abfallenden Streuflanke und zur Begrenzung der Wurfweite der Düngerpartikel im Grenzbereich vorgesehen. Bei dieser Grenzstreueinrichtung werden die von beiden Schleuderscheiben abgeschleuderten Düngerpartikel sehr stark abgebremst. Die Leitelemente sind als Bremsplatten ausgebildet und bremsen die abgeschleuderten Düngerpartikel so stark ab, dass sie nicht über die Grenze hinaus fliegen. Durch dieses sehr starke Abbremsen wird der Dünger zerschlagen und zerrieben. Hierdurch sind nur verhältnismäßig kleine Grenzstreuabstände zu verwirklichen. Die Düngerkörner werden durch die Bremsplatten nicht umgelenkt, um gezielt bis an die Grenze geworfen zu werden, sondern es wird die Geschwindigkeitsenergie durch Bremsplatten, ähnlich wie bei dem Abbremsen von Fahrzeugen, vernichtet. Dieses bedeutet, dass die Länge der Flugbahn der Düngerkörner durch das Abbremsen erheblich verkürzt wird.

Diese bekannte Grenzstreueinrichtung lässt sich nur auf eine bestimmte Arbeitsbreite für das Grenzstreuen einstellen. D.h., dass sich diese Grenzstreueinrichtung nur für eine bestimmte Arbeitsbreite einsetzten lässt, wenn kein Dünger über die Feldrandgrenze auf Wegen oder in Gräben geworfen werden soll. Diese Grenzstreueinrichtung lässt sich nicht für das sogenannte Randstreuen einsetzen, wenn die Feldrandgrenze nicht an einen Weg oder einen Graben, sondern zu einem Nachbarfeld endet. In diesen Fällen möchten die Landwirte nicht das sogenannte Grenzstreuen, sondern das Randstreuen durchführen. Beim Randstreuen wird akzeptiert, dass eine gewisse Menge Dünger über die Feldrandgrenze auf das Nachbarfeld geworfen wird, um eine möglichst vollständige Düngung bis zur Feldrandgrenze zu erreichen.

Ein weiterer Zentrifugaldüngerstreuer wird beispielsweise in der DE-OS 37 39 265 beschrieben. Bei diesem Zentrifugaldüngerstreuer ist jeder Schleuderscheibe ein eigener regelbarer Antriebsmotor zugeordnet. Um mit diesem Düngerstreuer das Grenzstreuen oder Randstreuen durchzuführen, wird die Drehzahl der der Grenze benachbarten Schleuderscheibe abgesenkt, um so ein unsymmetrisches Streubild mit einer in einer Randzone steil abfallenden Streuflanke zur Feldgrenze zu erreichen. Hierbei hat sich gezeigt, dass die Wurfweite der Düngerkörner zur Feldrandgrenze abnimmt, so dass sich ein unsymmetrisches Streubild mit einer zur Randzone steil abfallenden Streuflanke zur Feldrandgrenze ergibt. Es hat sich jedoch in der Praxis gezeigt, dass sich im Bereich der Feldrandgrenze in manchen Fällen eine Düngeranhäufung ergibt, so dass im der Feldrandgrenze benachbarten Randstreifen eine Überdüngung entsteht, während in einem entfernteren Bereich von der Feldrandgrenze eine Unterdüngung entsteht.

Der Erfindung liegt die Aufgabe zugrunde, ein Verfahren zum Rand- oder Grenzstreuen mit einem einseitig zur Feldrandgrenze steil abfallenden Streubild mit einem Schleuderdüngerstreuer vorzuschlagen, welches einfach durchführbar ist.

Diese Aufgabe wird erfindungsgemäß durch die Merkmale des Anspruches 1 gelöst.

Infolge dieser Maßnahmen wird eine sowohl für das Grenzstreuen wie für das Randstreuen einsetzbare Grenzstreueinrichtung geschaffen. Weiterhin wird eine schonende Umlenkung des Düngers erreicht. Der Dünger wird von den Leitelementen der Grenzstreueinrichtung nicht abgebremst, sondern zum Feld und in den Bereich des Feldrandes und des Feldrandbereiches möglichst gezielt umgelenkt, so dass das gewünschte Streubild mit der zur Feldrandgrenze hin steil abfallenden Streuflanke entsteht. Der Dünger wird also durch die Leitelemente möglichst zielgerichtet umgelenkt. Durch dieses "vorsichtige" Umlenken des Düngers wird ein Zerschlagen des Düngers verhindert, so dass diese Grenzstreueinrichtung auch bei großen Arbeitsbreiten sowohl zum Grenz- wie auch zum Randstreuen eingesetzt werden kann. Die Düngerenergie wird nicht durch Abbremsen vernichtet, sondern die Düngerkörner werden umgelenkt, so dass sie bis an der, von der Streuermitte gemessen, bis zu 15m und mehr liegenden Feldrandgrenze geworfen werden können. Durch die besondere Ausbildung der Leitelemente, wird den Körnern ein Drall mitgegeben, der sich vorteilhaft für die Erzeugung des Grenz- und Randstreubereiches des Streubildes auswirkt. Aufgrund der erfindungsgemäßen Anstellung und Anordnung der Leitelemente, werden die Düngerkörner nicht "abgebremst", sondern es findet eine "weich" beginnende Umlenkung durch die im Anfangsbereich etwa tangential zur Abwurfrichtung angestellten Leitelemente statt. Somit wird die Flugbahn der Düngerkörner gezielt zur Erzielung der steil abfallenden Streufläche im Rand- und Grenzbereich verändert. Die Düngerkörner werden also quasi unter fast vollständiger Erhaltung der Geschwindigkeitsenergie schonend umgelenkt. Ein Zerschlagen der Düngerkörner wird weitestgehend vermieden.

Um die Leitelemente, die die Düngerkörner durch Eingriff in die Flugbahn gezielt umlenken, in einfacher Weise herstellen zu können, ist erfindungsgemäß vorgesehen, dass die Leitelemente aus zwei winkelig zueinander angestellten ebenen Flächen bestehen. Um eine gleichmäßige Düngerverteilung, insbesondere auch im Feldrandbereich in einfacher Weise zu erhalten, ist vorgesehen, dass die Abwinkelung der Flächen zueinander von Leitelement zu Leitelement, in Drehrichtung der Schleuderscheiben gesehen, größer wird. Die kontinuierliche oder abschnittsweise Steigerung der Umlenkung der Körner durch die entsprechende Winkelstellung der Leitelemente wird die gezielte Umlenkung der Düngerkörner in Drehrichtung der Schleuderscheiben und zur Fahrtrichtungsebene erreicht.

Mit dem erfindungsgemäßen Grenzstreuschirm lassen sich sowohl das Rand- und Grenzstreuen in den Einsatzfällen durchführen, bei der die Feldrandgrenze in halber Arbeitsbreite des Zentrifugaldüngerstreuers von der Streuermitte entfernt liegt.

Weitere Einzelheiten der Erfindung sind der Beispielsbeschreibung und den Zeichnungen zu entnehmen. Hierbei zeigen
- Fig.1: den Schleuderstreuer in der Draufsicht und in Prinzipdarstellung,
- Fig.2: die Anordnung der Schleuderscheiben und der Grenzstreueinrichtung in der Draufsicht, in vergrößertem Maßstab und in Prinzipdarstellung,
- Fig.3: ein Normalstreubild in Prinzipdarstellung,
- Fig.4: die Streufächer zur Erzielung des Normalstreubildes gemäß Fig.3 in Prinzipdarstellung,
- Fig.5: ein Randstreubild in Prinzipdarstellung,
- Fig.6: die Lage der Streufächer für das Randstreuen zur Erzielung des Randstreubildes gemäß Fig.5 in Prinzipdarstellung,
- Fig.7: die Einstellung des Grenzstreuschirmes und die Ablenkung der Düngerpartikel gemäß der Verfahrensweise nach Fig.5 und 6 in Prinzipdarstellung,
- Fig.8: ein Grenzstreubild in Prinzipdarstellung,
- Fig.9: die Lage der Streufächer für das Grenzstreuen zur Erzielung des Grenzstreubildes gemäß Fig.8 in Prinzipdarstellung und
- Fig.10: die Einstellung des Grenzstreuschirmes und die Ablenkung der Düngerpartikel gemäß der Verfahrensweise nach Fig.8 und 9 in Prinzipdarstellung.

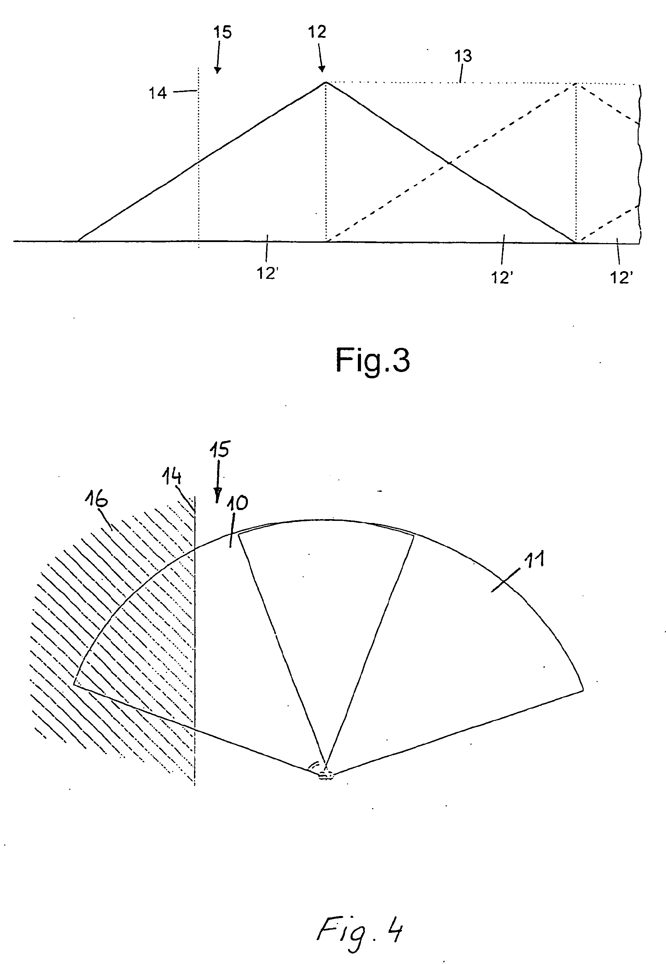

Der Zentrifugaldüngerstreuer weist den Rahmen 1 auf, über den der Zentrifugaldüngerstreuer an einen Dreipunktkraftheber eines Ackerschleppers anbaubar ist. An dem Rahmen 1 ist der Vorratsbehälter 2 angeordnet. Der Vorratsbehälter 2 ist durch ein dachförmiges Mittelteil 3 in zwei Auslauftrichter 4 aufgeteilt. Den unteren Enden des Auslauftrichters 4 sind mittels Schieber einstellbare Auslauföffnungen zugeordnet, die die Dosierorgane 5 bilden. Über diese Dosierorgane 5 wird den unterhalb der Dosierorgane 5 angeordneten Schleuderscheiben 6 das sich im Vorratsbehälter 2 befindliche Material in einstellbaren Mengen zugeführt. Die Schleuderscheiben 6 werden über eine nicht dargestellte Antriebseinrichtung im entgegengesetzten Drehsinn zueinander, wie durch die Pfeile 7 und 8 verdeutlicht ist, angetrieben. Auf den Schleuderscheiben 6 sind die Wurfschaufeln 9 angeordnet, die das über die Dosierorgane 5 zudosierte Material breitflächig jeweils in einem Streufächer 10 bzw. 11, wie in Fig.4 schematisch dargestellt ist, verteilt. Hierbei entsteht, wie in Fig.3 dargestellt ist, eine dreieckförmige Streugutverteilung 12, so dass sich durch nebeneinander liegende Streubahnen 12' eine gleichmäßige Düngerverteilung 13 ergibt.

Wenn nun am Feldrand 14 der Feldrandstreifen 15 bestreut wird, so liegt die zu befahrene Fahrgasse im halben Arbeitsbreitenabstand zu dem Feldrand 14, so dass, wie die Fig.3 und 4 zeigen, ein Teil des Düngers über die Feldrandgrenze auf das benachbarte Feld 16 oder in angrenzende Flächen, wie beispielsweise Wegen oder Gräben 17 geworfen wird.

Um nun entweder das Randstreuen oder Grenzstreuen, insbesondere für Arbeitsbreiten von bis zu ca. 15m durchführen zu können, wird eine Grenzstreueinrichtung 18 zur Begrenzung der Wurfweite und zur Erzielung steil abfallender Streuflanken 19 im der Feldrandgrenze 14 zugewandten Bereich 20 erzielt wird, eingesetzt. Die Grenzstreueinrichtung 18 weist mehrere aufrechtstehend angeordnete Düngerleitplatten 21 auf. Die Funktionsweise der Grenzstreueinrichtung 18 wird im Folgenden näher erläutert.

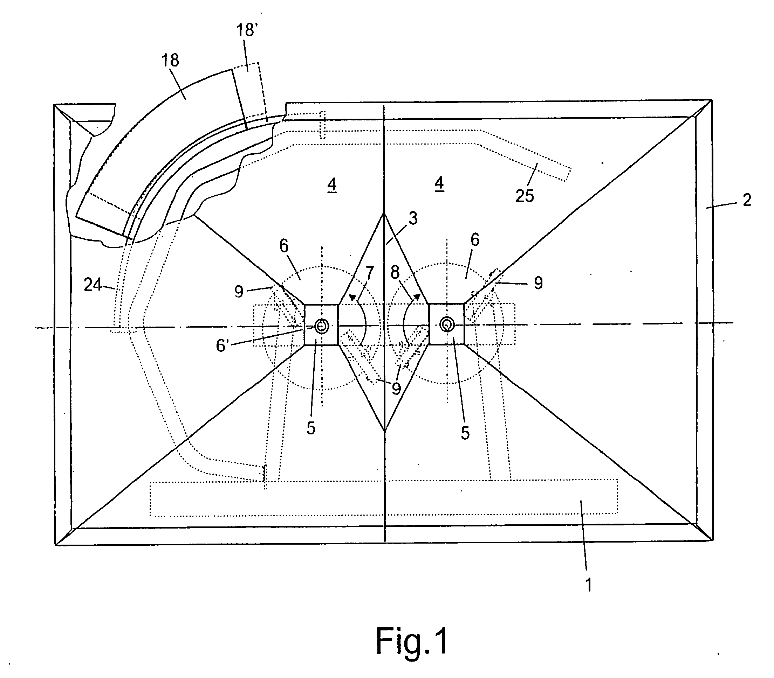

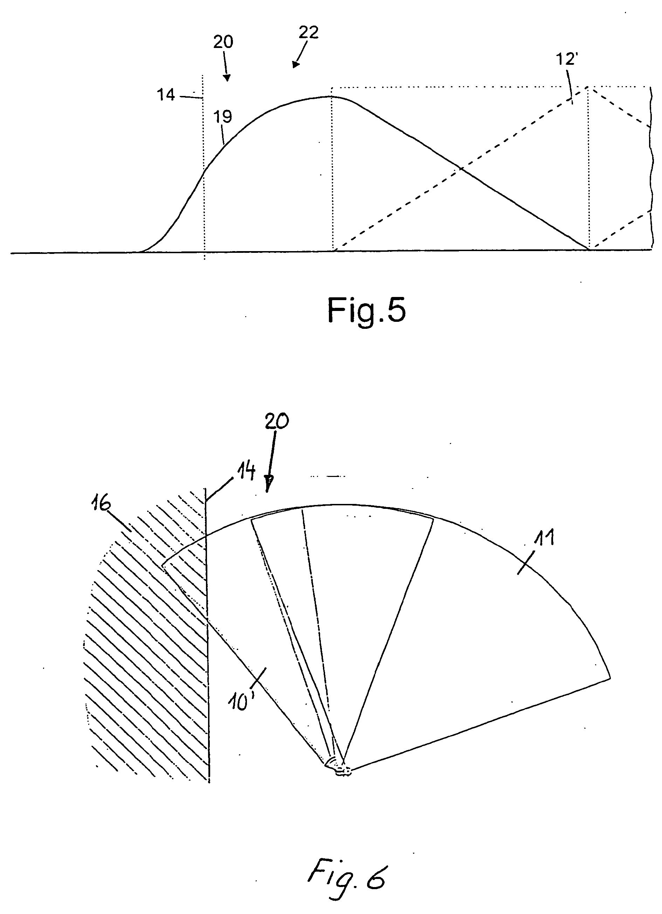

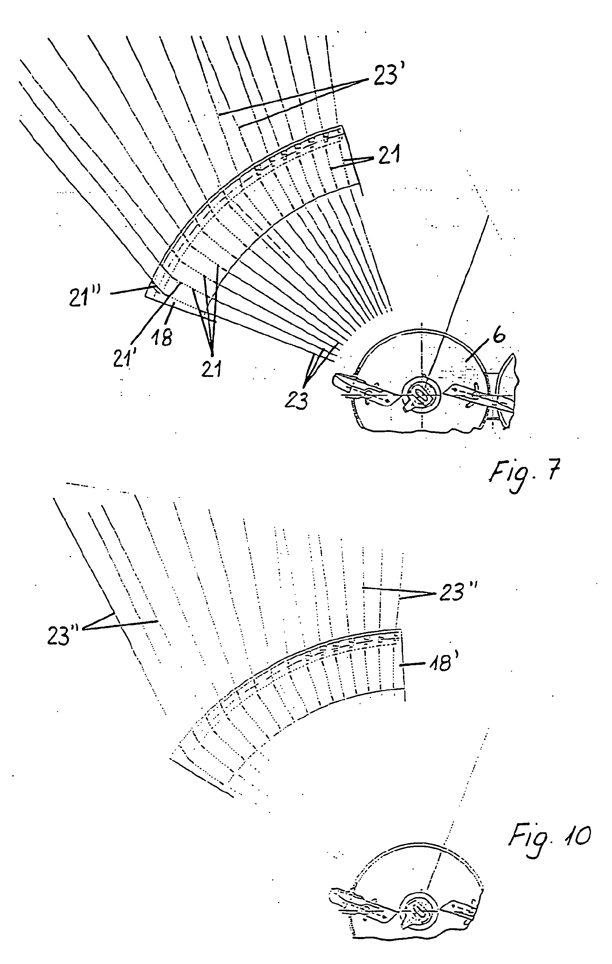

Wenn das sogenannte Randstreuen gemäß den Fig.5 und 6 durchgeführt werden soll, befindet sich der Grenzstreuschirm in der in Fig.1 und 2 sowie Fig.7 eingezeichneten Randstreustellung. Hierbei werden die in dem in den Fig.3 und 4 schraffiert dargestellten Bereich 16 abgeschleuderten Düngerpartikel derart umgelenkt, dass das in den Fig.5 und 6 entstehende Randstreubild 22 entsteht. Hierbei lenken die Leitelemente 21 des Grenzstreuschirmes 18 die Düngerpartikel ab, wie dieses die Fig. 6 und 7 zeigen. Hierbei wird der Streufächer 10 gemäß Fig.4 zu dem Streufächer 10' gemäß Fig.6 umgeformt. Die Flugbahnen 23 und 23' der Düngerkörner sind in der Fig.7 vereinfacht dargestellt. Die Leitelemente 21 der Grenzstreueinrichtung 18 sind im der Schleuderscheibe 6 zugewandten Bereich 21' jeweils etwa tangential zur Abwurfrichtung (Flugbahn 23) der Düngerkörner angeordnet (vgl. Fig.7). Im sich anschließenden Bereich 21", die die Ablenkrichtung (Flugbahn 23') festlegt, sind die Leitelemente 21 gegenüber der ursprünglichen Abwurfrichtung 23 entgegengesetzt der Drehrichtung 7 der Wurfschaufeln 9 und nach hinten ablenkend angestellt. Die Leitelemente 21 bestehen aus zwei winkelig zueinander angestellten ebenen Flächen 21' und 21 ". Die Abwinkelung der Flächen 21' und 21" zueinander wird, in Drehrichtung der Schleuderscheiben gesehen, von Leitelement 21 zu Leitelement 21 größer.

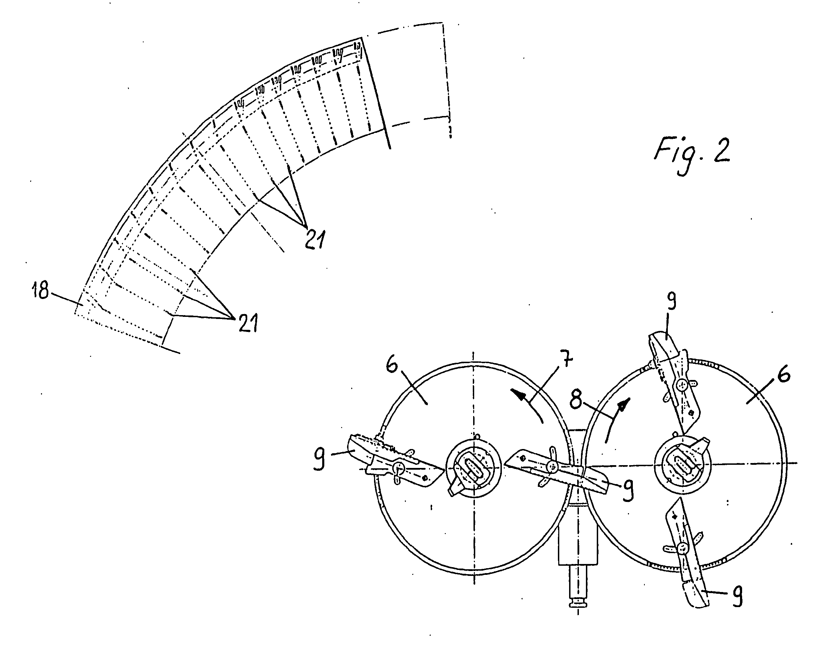

Wenn nun an Stelle des Randstreuens gemäß den Fig.5 und 6 das sogenannte Grenzstreuen, d.h., dass nach Möglichkeit keine Düngerkörner über die Feldrandgrenze 14 hinaus in angrenzende Gräben 17 oder auf angrenzende Wege geworfen werden sollen, wird die Grenzstreueinrichtung 18, aus der in den Fig.1 und 2 mit durchzogenen Linien dargestellten Position in die mit strichpunktierten Linien dargestellte Grenzstreuposition 18' verschwenkt. Hierbei ist die Grenzstreueinrichtung 18 an einer Haltevorrichtung 24 derart verschwenkbar oder verschiebbar, dass das Verschwenken und Verschieben um eine etwa mit der Drehachse der der Grenze zu gewandten Schleuderscheibe 6 erfolgt. Der Bügel 24, an dem die Grenzstreueinrichtung 18 verschiebbar angeordnet ist, ist an einem Schutzbügel 25 angeordnet, der gleichzeitig das zu nahe Herantreten an die rotierenden Schleuderscheiben 6 sicherstellt.

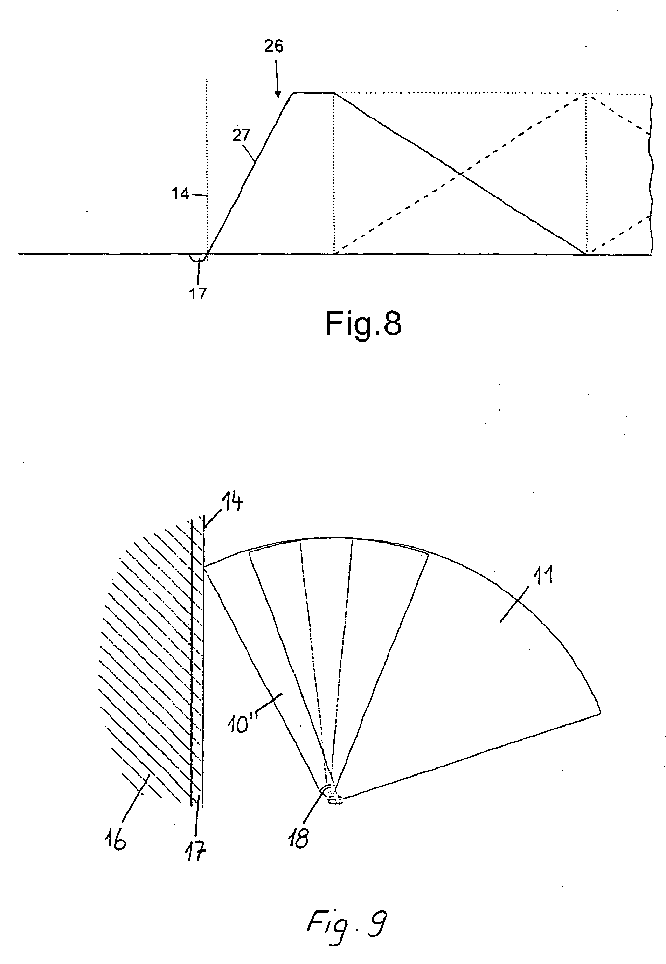

In der Grenzstreuposition 18' der Grenzstreueinrichtung 18 werden die abgeflogenen Düngerkörner in ihrer Flugbahn 23' durch die Leitelemente 21 entsprechend der in den Fig.6 und 10 dargestellten Abflugrichtung 23" umgelenkt, so dass das in den Fig. 8 und 9 entstehende Streubild 26 mit der zur Feldrandgrenze 14 steil abfallenden Streuflanke 27 bzw. Streufächer 10 " entstehen.

Hierbei wird gleichzeitig mit der Verschwenkung des Grenzstreuschirms 18 auch die der der Grenze 14 zugewandten Schleuderscheibe 6 zugeführten Düngermenge durch eine entsprechende Verstellung des Dosierorgans 5 reduziert, so dass sich im Streubild 26 im Randbereich keine Düngeranhäufung ergibt.

Die Halterung 24 des Grenzstreuschirms 18 ist derart ausgebildet, dass der Grenzstreuschirm 18 in Fahrtrichtung derart weit nach vorn geschoben werden kann, dass er den Vorratsbehälter 2 nicht nach hinten überragt. In der nach vorn geschobenen Position befindet sich der Grenzstreuschirm in einem geschützten Bereich, so dass er insbesondere beim Beladen nicht beschädigt werden kann.

Dem Grenzstreuschirm 18 ist eine nicht dargestellte Fernbedienungseinrichtung zugeordnet, mittels welcher er wahlweise in seine Betriebs- und Außerbetriebsposition bringbar ist. In bevorzugter Weise sind Markierungs- und Einstell- bzw. Feststellelemente zur Anzeige und Festlegung der Randstreu- und Grenzstreupositionen für verschiedene Grenzabstände am Grenzstreuschirm 18 und/oder der Halterung 24 bzw. dem Bügel 25 vorgesehen.

## Patentansprüche

1. Zentrifugaldüngerstreuer mit einem Vorratsbehälter, zumindest zwei um aufrechte Achsen in entgegengesetztem Drehsinn zueinander rotierend angetriebenen und mit Wurfschaufeln besetzten Schleuderscheiben, denen das sich im Vorratsbehälter befindliche Düngermaterial über einstellbare Dosieröffnungen zugeführt wird und mit außerhalb der Rotationsbahn der äußeren Enden der Wurfschaufeln angeordneter und Leitelemente aufweisender Grenzstreueinrichtung zur Erzeugung eines Streubildes mit einer zu Grenze steil abfallenden Streuflanke und zur Begrenzung der Wurfweite der Düngerpartikel im Grenzbereich,
**dadurch gekennzeichnet, dass** die Schleuderscheiben im einander benachbarten Mittelbereich des Streuers auf der Rückseite des Steuers auseinander drehend angetrieben sind und, dass die Leitelemente (21) der Grenzstreueinrichtung (18) im der Schleuderscheibe (6) zugewandten Bereich jeweils etwa tangential zur ursprünglichen Flugbahn (23) der Düngerkörner angeordnet sind und im sich anschließenden Bereich, der die abgelenkte Flugbahn (23') festlegt, gegenüber der ursprünglichen Flugbahn (23) entgegengesetzt der Drehrichtung (7) der Wurfschaufeln (9) und nach hinten ablenkend angestellt sind, und dass die als Düngerleitschirm ausgebildete Grenzstreueinrichtung (18) auf eine Position für das Grenzstreuen und auf eine Position für das Randstreuen einstellbar ist.

2. Zentrifugaldüngerstreuer nach Anspruch 1, **dadurch gekennzeichnet, dass** die Leitelemente (21) aus zwei winkelig zueinander angestellten ebenen Flächen (21', 21") bestehen.

3. Zentrifugaldüngerstreuer nach Anspruch 2, **dadurch gekennzeichnet, dass** die Abwinkelung der Flächen (21', 21") zueinander von Leitelement (21) zu Leitelement (21), in Drehrichtung (7) der Schleuderscheiben (6) gesehen, größer wird.

## Claims

1. Centrifugal fertilizer spreader comprising a storage tank, at least two spinning discs, which are driven rotatably about vertical axes in mutually opposite rotational directions and are equipped with thrower blades and to which the fertilizer material present in the storage tank is fed via adjustable metering openings, and further comprising a border spreading device, which is disposed outside the rotational path of the outer ends of the thrower blades and has guide elements, for producing a spreading pattern having a spreading flank which drops steeply towards the border and for limiting the range of throwing of the fertilizer particles in the border region, **characterized in that** the spinning discs in the mutually adjacent middle region of the spreader on the rear side of the spreader are driven such that they rotate apart, **in that** the guide elements (21) of the border spreading device (18), in the region facing towards the spinning disc (6), are respectively arranged roughly tangentially to the original trajectory (23) of the fertilizer granules, and in the adjoining region, which defines the deflected trajectory (23'), are set in relation to the original trajectory (23) oppositely to the rotational direction (7) of the thrower blades (9) and are set such that they deflect rearwards, and **in that** the border spreading device (18), configured as a fertilizer guide screen, is adjustable to a boundary spreading position and to an edge spreading position.

2. Centrifugal fertilizer spreader according to Claim 1, **characterized in that** the guide elements (21) consist of two plane surfaces (21', 21 ") set at an angle to each other.

3. Centrifugal fertilizer spreader according to Claim 2, **characterized in that** the angling-off of the surfaces (21', 21 ") relative to each other, viewed in the rotational direction (7) of the spinning discs (6), becomes greater from guide element (21) to guide element (21).

## Revendications

1. Epandeur centrifuge d'engrais comportant :
- un réservoir, au moins deux disques d'épandage entraînés en rotation dans des sens de rotation opposés, autour d'axes de rotation montants, les disques étant équipés de palettes d'éjection recevant l'engrais du réservoir par des orifices de dosage réglables, et
- une installation d'épandage en limite située à l'extérieur de la trajectoire de rotation de l'extrémité extérieure des palettes d'éjection, cette installation comportant des éléments de guidage pour former une image d'épandage avec un flanc d'épandage chutant brusquement vers la limite et pour délimiter la portée d'éjection des particules d'engrais dans la zone limite,
épandeur centrifuge **caractérisé en ce que**
- les disques d'épandage sont entraînés en rotation de manière divergente, de façon adjacente dans la zone médiane de l'épandeur sur le côté arrière de celui-ci,
- les éléments de guidage (21) de l'installation d'épandage en limite (18), sont prévus dans la zone tournée vers les disques d'épandage (6), chacun sensiblement tangentiel à la trajectoire de vol (23), initiale, des grains d'engrais et dans la zone adjacente qui fixe la trajectoire de vol (23'), déviée, les éléments de guidage sont inclinés par rapport à la trajectoire de vol (23), initiale, en sens opposé du sens de rotation (7) des palettes d'éjection (9) et de façon déviée vers l'arrière, et
- l'installation d'épandage en limite (18) réalisée sous la forme d'un écran de guidage d'engrais, est réglable sur une position d'épandage en limite et sur une position d'épandage en bordure.

2. Epandeur centrifuge d'engrais selon la revendication 1,
**caractérisé en ce que**
des éléments de guidage (21) se composent de deux surfaces planes (21', 21 ") faisant entre elles un angle.

3. Epandeur centrifuge d'engrais selon la revendication 2,
**caractérisé en ce que**
l'angle des surfaces (21', 21") l'une par rapport à l'autre augmente d'un élément de guidage (21) à l'autre élément de guidage (21), dans le sens de rotation (7) des disques d'épandage (6).
